# FASCICULE DE BREVET EUROPEEN

(11) **EP 1 617 060 B1**
(45) Date de publication et mention de la délivrance du brevet: **07.05.2008**
(21) Numéro de dépôt: 05291417.3
(22) Date de dépôt: 30.06.2005
(51) Int. Cl.: F02D 41/02, F01N 3/08

(54) **SYSTEME DE DESULFATATION D'UN PIEGE A NOx DISPOSE DANS UNE LIGNE D'ECHAPPEMENT D'UN MOTEUR DIESEL DE VEHICULE AUTOMOBILE**
System zur Desulfatisierung eines NOX-Speichers in einer Abgasstrecke eines Kraftfahrzeug-Dieselmotors
System for desulfurization of a NOx trap disposed in an exhaust line of a vehicle diesel motor

(30) Priorité: 15.07.2004 FR 0407884
(43) Date de publication de la demande: 18.01.2006
(73) Titulaire: Peugeot Citroen Automobiles SA, 78140 Vélizy-Villacoublay (FR)
(72) Inventeur: Audoin, Arnaud, 75018 Paris (FR)
(74) Mandataire: Habasque, Etienne J. Jean-François

(56) Documents cités:
- EP-A- 0 971 101
- EP-A- 1 350 932
- FR-A- 2 835 566
- US-A- 6 082 100

## Description

La présente invention concerne un système de désulfatation d'un piège à NOx associé à des moyens formant catalyseur d'oxydation intégrés dans un même support, et disposé dans une ligne d'échappement d'un moteur Diesel de véhicule automobile.

Plus particulièrement, l'invention se rapporte à un tel système dans lequel le moteur est associé à des moyens à rampe commune d'alimentation en carburant des cylindres du moteur, adaptés, par modification de paramètres de contrôle du fonctionnement du moteur, pour faire basculer le moteur entre des fonctionnements en mélange pauvre et en mélange riche, les moyens d'alimentation étant adaptés pour définir au moins deux stratégies de pilotage du fonctionnement du moteur en mélange pauvre, dites de niveau 1 et de niveau 2, pour obtenir des niveaux thermiques différents dans la ligne d'échappement, le niveau thermique obtenu par application de la stratégie de niveau 2 étant supérieur à celui obtenu par application de la stratégie de niveau 1.

De façon typique, un moteur Diesel de véhicule automobile est associé à des moyens de traitement de ses gaz d'échappement pour réduire la quantité de polluants rejetée dans l'atmosphère et notamment la quantité de particules d'oxyde d'azote, ou NOx.

A cet effet, le moteur est généralement associé à un piège à NOx agencé dans la ligne d'échappement de celui-ci et adapté pour stocker de telles particules sous la forme de nitrate sur des sites spécifiques de stockage, tels que du baryum par exemple.

Afin de régénérer le piège à NOx, le fonctionnement du moteur est basculé en mélange riche afin de libérer dans la ligne d'échappement une quantité suffisante de réducteurs du nitrate contenu dans le piège, tels que HC et CO. Le nitrate est alors réduit et désorbé sous la forme de N₂ et les sites de stockage libérés pour un nouveau stockage de NOx.

Or, ces sites de stockage sont également aptes à stocker des sulfates lorsqu'ils sont exposés à du SO₂ généré par le moteur à partir du soufre contenu dans le carburant et l'huile de lubrification du moteur. Le piège se sature ainsi progressivement en sulfates, ce qui a pour effet de réduire ses performances catalytiques.

Il est donc nécessaire de désulfater régulièrement le piège afin d'éliminer les sulfates qui y sont stockés.

Or, du fait de la grande stabilité thermodynamique de ces derniers, le seul basculement en mode riche du moteur ne suffit pas pour réduire ceux-ci. A cette fin, il est également nécessaire d'élever la température du piège jusqu'à des températures élevées de l'ordre de 700°C.

A cet effet, le piège à NOx est généralement associé à des moyens formant catalyseur agencés en amont de celui-ci ou intégrés sur le même support que le piège. Les moyens formant catalyseur sont adaptés pour brûler des hydrocarbures en provenance du moteur et ainsi générer des exothermes pour élever la température du piège.

Le document EP 0 971 101 décrit un système de désulfatation d'un piège à NOₓ, dans lequel le piège est maintenu ou chauffé à une certaine plage de températures pour une certaine durée.

De manière typique, pour la désulfatation du piège à NOX, le moteur est commandé selon deux types de mélanges pauvres. Un premier mélange pauvre est déterminé pour une élévation préliminaire de la température des moyens formant catalyseur pour que ceux-ci atteignent un état d'amorçage. Dans leur état d'amorçage, les moyens formant catalyseur sont alors aptes à brûler des grandes quantités d'hydrocarbures délivrées par le moteur fonctionnant selon un second mélange pauvre, permettant ainsi d'obtenir un niveau thermique élevé dans le piège à NOx.

Or, si la désulfatation du piège à NOx est nécessaire pour garantir des performances catalytiques minimales pour celui-ci, on sait que de hauts niveaux thermiques endommagent irréversiblement le piège, les matériaux des sites de stockage étant en effet dégradés par de tels niveaux thermiques, ce qui se traduit au final par vieillissement accéléré du piège.

Il est donc nécessaire de commander la température du piège de façon appropriée afin de satisfaire à un compromis entre l'efficacité de la désulfatation et le vieillissement prématuré de celui-ci.

D'autre part, les sulfates se déstockent essentiellement sous la forme de SO₂ lorsque le milieu est riche en oxygène et sous la forme de H₂S (gaz mal odorant) lorsque le milieu est déficitaire en oxygène.

La formulation d'un piège à NOx peut de manière avantageuse contenir des éléments de stockage de l'oxygène, ou OSC, qui libèrent de l'oxygène lorsque le milieu est pauvre en espèces oxydantes, c'est-à-dire lorsque le moteur bascule d'un fonctionnement en mode riche à un fonctionnement en mode pauvre.

Cependant, la capacité de stockage en oxygène du piège à NOx n'est pas illimitée, de sorte que la réserve en oxygène stockée est épuisée rapidement. Ainsi, lors d'une désulfatation, lorsque la température est suffisante pour pouvoir déstocker les sulfates, ceux-ci sont d'abord désorbés sous la forme de SO₂ puis sous la forme de H₂S.

Le but de la présente invention est donc de proposer un système qui permette de maintenir le piège à NOx dans une fenêtre thermique d'efficacité maximale de désulfatation, tout en minimisant le risque de vieillissement du piège à NOx et l'émission d'H₂S lors d'une désulfatation.

A cet effet, l'invention a pour objet un système de désulfatation d'un piège à NOx associé à des moyens formant catalyseur d'oxydation intégrés dans un même support, et disposé dans une ligne d'échappement d'un moteur Diesel de véhicule automobile, dans lequel le moteur est associé à des moyens à rampe commune d'alimentation en carburant des cylindres du moteur, adaptés, par modification de paramètres de contrôle du fonctionnement du moteur, pour faire basculer le moteur entre des fonctionnements en mélange pauvre et en mélange riche, les moyens d'alimentation étant adaptés pour définir au moins deux stratégies de pilotage du fonctionnement du moteur en mélange pauvre, dites de niveau 1 et de niveau 2, pour obtenir des niveaux thermiques différents dans la ligne d'échappement, le niveau thermique obtenu par application de la stratégie de niveau 2 étant supérieur à celui obtenu par application de la stratégie de niveau 1, caractérisé en ce qu'il comprend :
- des moyens de détection d'une requête de désulfatation du piège à NOx;
- des moyens d'acquisition de la température en amont et en aval du support du piège à NOx et des moyens formant catalyseur pour définir un point de fonctionnement en température de celui-ci ;
- des premiers moyens de comparaison de ce point de fonctionnement à des première et seconde courbes prédéterminées de limites basse et haute pour piloter le fonctionnement du moteur selon le mode riche si le point de fonctionnement est compris dans la plage définie par les première et seconde courbes, ou selon le mélange pauvre si le point de fonctionnement est en dehors de cette plage ; et
- des seconds moyens de comparaison de ce point de fonctionnement à des troisième et quatrième courbes prédéterminées de limites basse et haute pour piloter le fonctionnement du moteur selon la stratégie de niveau 2 si le point de fonctionnement est compris dans la plage définie par les troisième et quatrième courbes, ou selon la stratégie de niveau 1 si le point de fonctionnement est en dehors de cette plage.

Selon d'autres caractéristiques, ce système est caractérisé en ce que :
- si le point de fonctionnement est simultanément compris dans la plage définie par les première et la seconde courbes et la plage définie par les troisième et quatrième courbes, le moteur est piloté selon son fonctionnement en mélange riche ;
- le fonctionnement du moteur est piloté selon le fonctionnement en mélange riche pendant au maximum une première durée prédéterminée ;
- la première durée prédéterminée est égale à 10 secondes environ.
- le fonctionnement du moteur est piloté en mélange pauvre pendant au minimum une seconde durée prédéterminée ;
- la seconde durée prédéterminée est comprise entre 2 et 3 secondes environ ;
- si le cumul de l'ensemble des durées du fonctionnement du moteur en mode riche est supérieur à une troisième durée prédéterminée, la phase de désulfatation du piège à NOx est stoppée ; et
- la troisième durée est égale à 270 secondes environ.

L'invention sera mieux comprise à la lecture de la description qui va suivre, donnée uniquement à titre d'exemple, et faite en relation avec les dessins annexés, dans lesquels :
- la figure 1 est une vue schématique du système selon l'invention associé à un moteur Diesel de véhicule automobile ;
- la figure 2A est un graphique illustrant la cartographie de premiers moyens de comparaison entrant dans la constitution du système de la figure 1 ;
- la figure 2B est un graphique illustrant la cartographie de seconds moyens de comparaison entrant dans la constitution du système de la figure 1 ; et
- la figure 3 est un organigramme du fonctionnement du système de la figure 1.

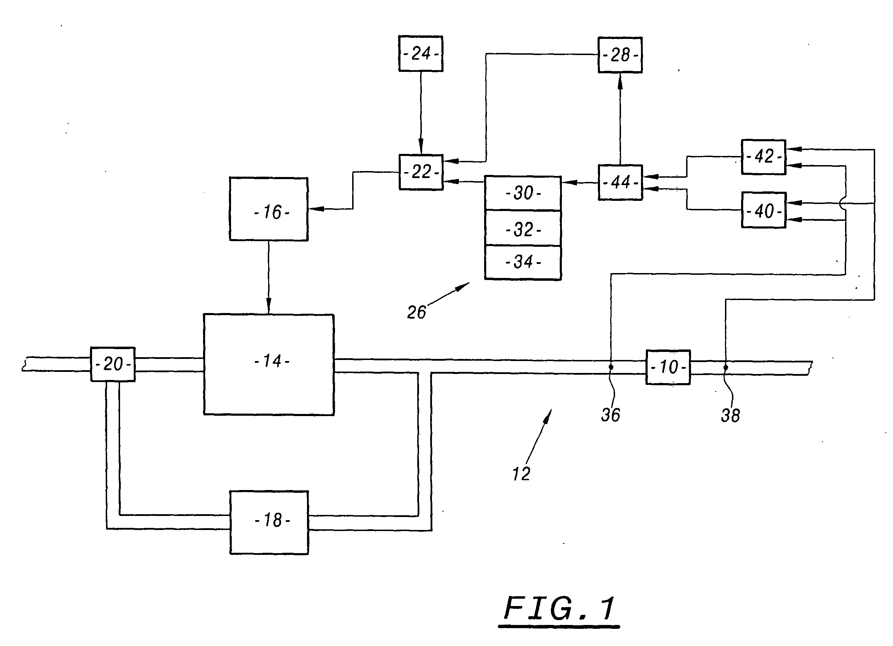

Sur la figure 1, on a illustré de manière schématique un système de désulfatation d'un piège à NOx 10 agencé dans une ligne d'échappement 12 d'un moteur Diesel 14 de véhicule automobile.

Le piège à NOx 10 réalise également la fonction de catalyse d'hydrocarbures par l'intégration sur son support de moyens formant catalyseur.

Le moteur 10 est également associé à des moyens 16 à rampe commune d'alimentation en carburant des cylindres de celui-ci et à des moyens 18 de recirculation d'une partie des gaz d'échappement en entrée de celui-ci délivrant des gaz d'échappement à des moyens 20 d'admission de mélange air/gaz d'échappement en entrée du moteur.

Les moyens 16 à rampe commune d'alimentation sont adaptés, par modification des paramètres de contrôle du fonctionnement du moteur 14, pour faire basculer le moteur entre des fonctionnements à mélange pauvre et à mélange riche.

Ceci est réalisé sous le contrôle d'un superviseur d'alimentation 22 qui sélectionne et délivre aux moyens 16 à rampe commune d'alimentation, un jeux de paramètres de fonctionnement du moteur. Un tel jeu est sélectionné parmi deux jeux de paramètres délivrés par des moyens 24, 26 de stratégies de pilotage du fonctionnement du moteur.

Cette sélection est réalisée en fonction d'un signal en provenance de moyens 28 d'émission d'une requête de désulfatation du piège à NOx ou d'arrêt de celle-ci.

Si aucune requête de désulfatation n'est émise ou si une requête de de fin de celle-ci est émise, le superviseur 22 sélectionne le jeu de paramètres des moyens 24 de stratégie de pilotage. Ce jeu définit, pour les moyens 16 d'alimentation, une première stratégie de pilotage du fonctionnement du moteur en mélange pauvre pour un fonctionnement normal de celui-ci.

Si une requête de désulfatation est émise, le superviseur 22 sélectionne le jeu de paramètres des moyens 26 de stratégie de pilotage. Les moyens 26 sélectionnent et délivrent en sortie, d'une manière qui sera expliquée plus en détail par la suite, un jeu de paramètres parmi :
- un premier jeu de paramètres 30 définissant, pour les moyens 16 d'alimentation, une seconde stratégie de pilotage du fonctionnement du moteur en mélange pauvre, dite de niveau 1. Cette stratégie est définie pour obtenir un premier niveau thermique dans le support du piège à NOx et des moyens formant catalyseur, ce premier niveau thermique étant supérieur à celui obtenu par application de la première stratégie en mélange pauvre ;
- un deuxième jeu de paramètres 32 définissant, pour les moyens 16 d'alimentation, une troisième stratégie de pilotage du fonctionnement du moteur en mélange pauvre, dite de niveau 2. Cette stratégie est définie pour obtenir un second niveau thermique dans le support du piège à NOx et des moyens formant catalyseur, ce second niveau thermique étant supérieur à celui obtenu par application de la stratégie de niveau 1 ; et
- un troisième jeu de paramètres 34 définissant, pour les moyens 16 d'alimentation, une stratégie de pilotage du fonctionnement du moteur en mélange riche pour la désulfatation du piège à NOx.

L'application de la stratégie de niveau 1 permet de chauffer les moyens formant catalyseur pour que ceux-ci atteignent un état d'amorçage nécessaire pour l'application de la stratégie de niveau 2. Cette dernière est génératrice d'exothermes importants aptes à élever la température interne du piège à NOx 10 jusqu'aux températures requises pour la désulfatation de celui-ci, comme cela est connu en soi dans l'état de la technique.

Le système selon l'invention comprend également des moyens 36, 38 d'acquisition de la température en amont AT1 et en aval AT2 du support du piège à NOx et des moyens formant catalyseur.

Le couple de températures (AT1,AT2) en amont et en aval du support définit un point de fonctionnement en température de celui-ci.

Il peut en effet être montré que ce point de fonctionnement est représentatif de la température interne du support du piège à NOx et des moyens formant catalyseur. Ainsi, en commandant le basculement entre les différentes stratégies du pilotage du fonctionnement du moteur en fonction de ce point de fonctionnement, on obtient une désulfatation du piège à NOx réalisée en fonction de la température interne de celui-ci. Il est alors possible de commander cette dernière pour qu'elle atteigne, et se maintienne dans, une plage prédéterminée de températures optimales pour la désulfatation, tout en minimisant le vieillissement du piège à NOx, par exemple la plage [650, 750]°C, comme cela sera expliqué plus en détail par la suite.

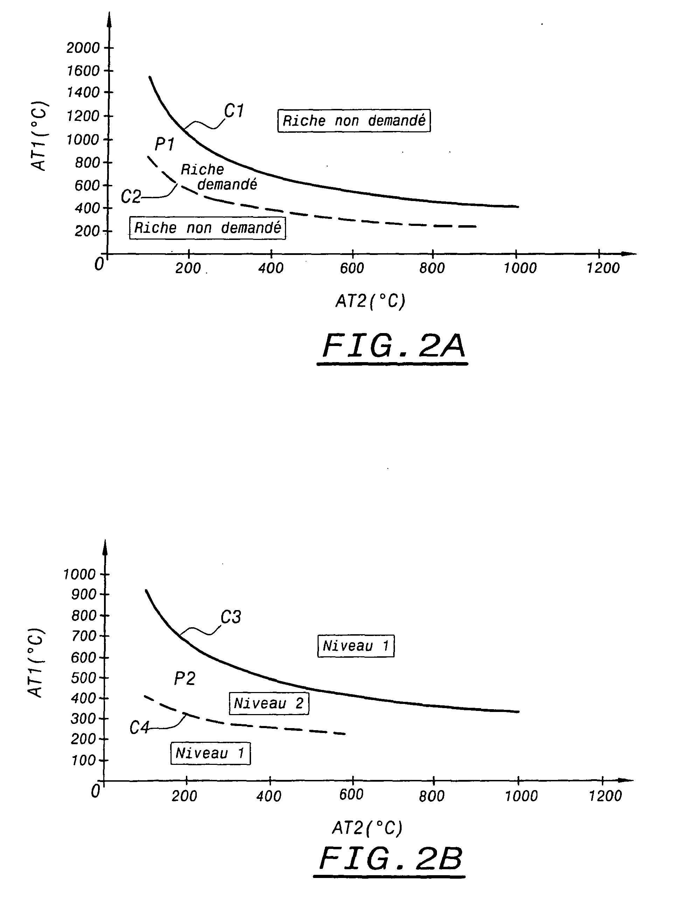

Le point de fonctionnement est délivré à des premiers moyens 40 de comparaison de celui-ci à des première et seconde courbes de limites haute et basse d'une première cartographie prédéterminée illustrée sur la figure 2A.

Comme cela est illustré sur la figure 2A, les première et seconde courbes de limites haute et basse, désignées respectivement par C1 et C2 sur la figure 2A, définissent une plage P1. Si le point de fonctionnement appartient à cette plage P1, une requête en pilotage du fonctionnement du moteur en mode riche est émise par les premiers moyens 36 de comparaison, qui, sinon émettent une requête en pilotage du fonctionnement du moteur en mélange pauvre.

Le point de fonctionnement est également délivré à des seconds moyens 42 de comparaison de celui-ci à des troisième et quatrième courbes de limites haute et basse d'une seconde cartographie prédéterminée illustrée sur la figure 2B.

Comme cela est illustré sur la figure 2B, les troisième et quatrième courbes de limites haute et basse, désignées respectivement par C3 et C4 sur la figure 2B, définissent une plage P2. Si le point de fonctionnement appartient à cette plage P2, une requête de pilotage de fonctionnement du moteur selon la stratégie de niveau 2 est émise par les seconds moyens 38 de comparaison, qui, sinon, émettent une requête de pilotage de fonctionnement du moteur selon la stratégie de niveau 1.

Les requêtes émises par les premiers et seconds moyens 40, 44 de comparaison sont délivrées à des moyens 44 de gestion qui gèrent les priorités entre les requêtes des moyens 40, 42 de comparaison et les durées que le moteur passe dans ses différentes stratégies de pilotage en mélange riche, et en mélange pauvre de niveau 1 et de niveau 2.

Concernant la gestion des priorités entre les requêtes, les moyens 44 de gestion délivrent un signal de sélection de stratégie aux moyens 26 pour le basculement du fonctionnement du moteur selon les règles suivantes :
- si des requêtes de pilotage en mélange riche et de pilotage selon la stratégie de niveau 2 sont simultanément émises, c'est-à-dire si le point de fonctionnement est compris simultanément dans les plages P1 et P2, les moyens 44 de gestion sélectionnent prioritairement le pilotage du fonctionnement du moteur en mélange riche ;
- si des requêtes en mélange riche et de pilotage selon la stratégie de niveau 1 sont émises, les moyens 44 de gestion sélectionnent le pilotage du fonctionnement du moteur en mélange riche ; et
- si une requête de pilotage en mélange pauvre est émise par les premiers moyens 40 de comparaison, les moyens 44 de gestion sélectionnent la stratégie de pilotage correspondant à la requête des seconds moyens 42 de comparaison, c'est-à-dire soit la stratégie de niveau 1, soit celle de niveau 2, en fonction de l'appartenance du point de fonctionnement à la plage P2.

Concernant les durées passées par le moteur dans les différentes stratégies, les moyens 44 de gestion appliquent en outre les règles suivantes :
- si la durée passée par le moteur dans le fonctionnement en mélange riche, depuis son basculement dans celui-ci, excède une première durée prédéterminée, par exemple environ 10 secondes, les moyens 44 de gestion sélectionnent la stratégie de la requête des seconds moyens 42 de comparaison. Le moteur est ainsi basculé dans un fonctionnement en mélange pauvre pour minimiser l'émission de H₂S ;
- si le moteur est basculé dans un fonctionnement en mélange pauvre, c'est-à-dire soit la stratégie de niveau 1 soit la stratégie de niveau 2, les moyens 44 de gestion inhibent la stratégie de pilotage en mélange riche au minimum pendant une seconde durée prédéterminée, par exemple environ 2 à 3 secondes. Le moteur est alors piloté en mélange pauvre au moins pendant cette durée. Ceci permet d'atteindre la limite haute de la plage de température optimale, de sorte que, lorsque le fonctionnement du moteur est basculé dans le fonctionnement en mélange riche, la température interne du piège à NOx ne sort pas prématurément de cette plage, ce qui aurait pour conséquence un fonctionnement oscillant du moteur. Ceci laisse également suffisamment de temps au piège à NOx pour stocker suffisamment d'oxygène pour la désorbtion du sulfate sous forme de SO₂ lors du prochain basculement du fonctionnement du moteur en mode riche.

Les moyens 44 de gestion sont également adaptés pour détecter, et délivrer aux moyens 28 d'émission, un signal de fin de désulfatation.

Plus particulièrement, les moyens 44 de gestion sont adaptés pour compter la durée totale cumulée passée par le moteur dans son fonctionnement en mélange riche depuis le début de la désulfatation. Si cette durée excède une durée prédéterminée, par exemple environ 270 secondes, le piège à NOx est désulfaté. Les moyens 44 de gestion délivrent alors le signal de fin de désulfatation aux moyens 28 d'émission qui émettent en réponse un signal d'arrêt de désulfatation au superviseur 22.

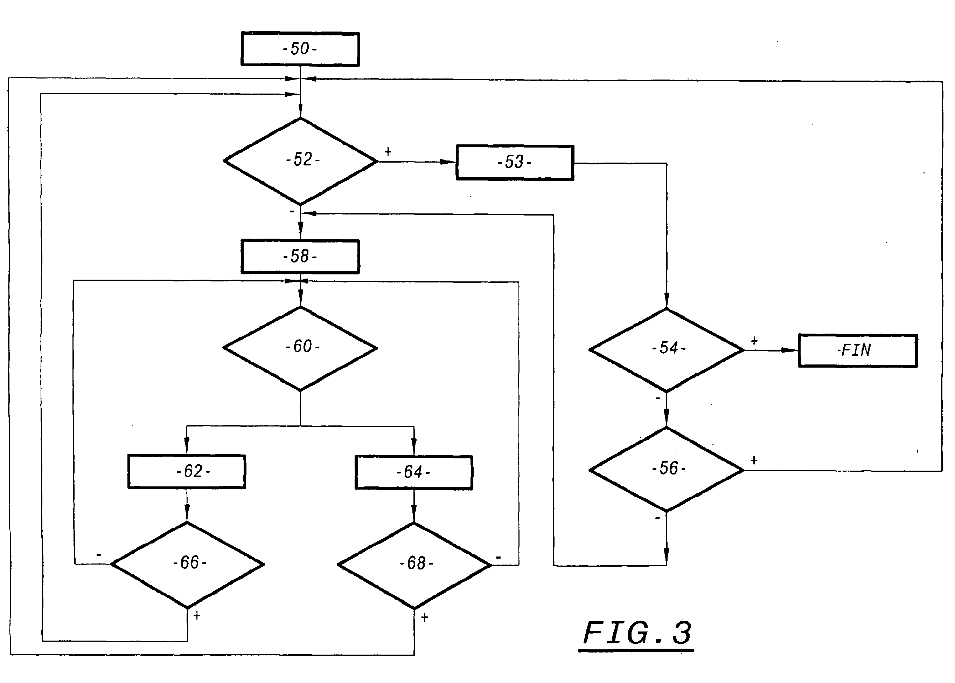

La figure 3 est un organigramme du fonctionnement du système selon l'invention.

Dans une étape 50, une requête en désulfatation est émise et le pilotage du fonctionnement du moteur est réalisé selon les stratégies en mélange riche ou en mélange pauvre de niveau 1 ou de niveau 2.

Dans une étape 52, un test est réalisé pour savoir si le point de fonctionnement est dans la plage P1 pour le fonctionnement en mélange riche du moteur. Si le résultat de ce test est positif, le moteur est basculé, en 53, dans son fonctionnement en mélange riche.

Le fonctionnement du système selon l'invention se poursuit alors dans une étape 54 de test sur la durée totale cumulée que le moteur a passé dans son fonctionnement en mélange riche depuis le début de la désulfatation.

Si cette durée est supérieure à 270 secondes, une requête de fin de désulfatation est émise. Sinon, une étape 56 de test sur la durée passée par le moteur dans son fonctionnement en mélange riche, depuis son basculement dans celui-ci, est déclenchée. Si cette durée n'excède pas 10 secondes, l'étape 56 boucle sur l'étape 52.

Si cette durée excède 10 secondes, le fonctionnement du moteur est alors basculé, dans une étape 58, dans un fonctionnement en mélange pauvre.

Un test est alors réalisé en 60 pour savoir si le point de fonctionnement est compris dans la plage P2 pour le fonctionnement du moteur selon la stratégie de niveau 2. Si la stratégie de niveau 2 est déterminée, le moteur est basculé, dans une étape 62, dans son fonctionnement selon la stratégie de niveau 2, et, si la stratégie de niveau 1 est déterminée, le moteur est basculé, dans une étape 64, dans son fonctionnement selon la stratégie de niveau 1.

Successivement aux étapes 62 et 64, un test est mis en oeuvre dans des étapes 66 et 68 respectivement pour savoir si la durée passée par le moteur depuis son basculement dans son fonctionnement en mélange pauvre excède 2 secondes. Si le résultat de ce test est négatif, les étapes 66 et 68 bouclent chacune sur l'étape 60.

Si le résultat de ce test est positif, les étapes 66 et 68 bouclent chacune sur l'étape 52 pour déterminer si le moteur peut être basculé dans le fonctionnement en mélange riche.

Comme il est possible de le constater, la gestion des priorités et des durées que le moteur passe dans ses différentes stratégies de pilotage est mise en oeuvre par un ordonnancement approprié des tests sur les stratégies de pilotage du fonctionnement du moteur et sur les durées associées à celles-ci.

Les courbes de limite haute et de limite basse des premiers et seconds moyens de comparaison ainsi que les durées prédéterminées associées aux stratégies de pilotage sont déterminées, expérimentalement par exemple, pour que la température interne du piège à NOx soit comprise dans la plage de températures optimales [650,750]°C lors de la désulfatation de celui-ci, et pour que l'émission de H₂S soit minimisée.

Le système selon l'invention peut être mis en oeuvre par une unité de traitement d'information exécutant des instructions logicielles, par exemple l'unité de contrôle du fonctionnement du moteur, ou ECU, ou une unité de traitement d'informations dédiée. Le système selon l'invention peut également être mis en oeuvre sur des circuits câblés spécifiquement dédiés.

Bien entendu, d'autres modes de réalisation de l'invention sont possibles.

## Revendications

1. Système de désulfatation d'un piège à NOx (10) associé à des moyens formant catalyseur d'oxydation intégrés dans un même support, et disposé dans une ligne d'échappement (12) d'un moteur Diesel (14) de véhicule automobile, dans lequel le moteur est associé à des moyens (16) à rampe commune d'alimentation en carburant des cylindres du moteur (14), adaptés, par modification de paramètres de contrôle du fonctionnement du moteur (14), pour faire basculer le moteur (14) entre des fonctionnements en mélange pauvre et en mélange riche, les moyens (16) d'alimentation étant adaptés pour définir au moins deux stratégies de pilotage du fonctionnement du moteur en mélange pauvre, dites de niveau 1 et de niveau 2, pour obtenir des niveaux thermiques différents dans la ligne d'échappement (12), le niveau thermique obtenu par application de la stratégie de niveau 2 étant supérieur à celui obtenu par application de la stratégie de niveau 1, **caractérisé en ce qu'**il comprend :
- des moyens (22) de détection d'une requête de désulfatation du piège à NOx ;
- des moyens (36, 38) d'acquisition de la température en amont et en aval du support du piège à NOx et des moyens formant catalyseur pour définir un point de fonctionnement en température de celui-ci ;
- des premiers moyens (40) de comparaison de ce point de fonctionnement à des première et seconde courbes prédéterminées de limites basse et haute pour piloter le fonctionnement du moteur selon le mode riche si le point de fonctionnement est compris dans la plage définie par les première et seconde courbes, ou selon le mélange pauvre si le point de fonctionnement est en dehors de cette plage ; et
- des seconds moyens (42) de comparaison de ce point de fonctionnement à des troisième et quatrième courbes prédéterminées de limites basse et haute pour piloter le fonctionnement du moteur selon la stratégie de niveau 2 si le point de fonctionnement est compris dans la plage définie par les troisième et quatrième courbes, ou selon la stratégie de niveau 1 si le point de fonctionnement est en dehors de cette plage.

2. Système selon la revendication 1, **caractérisé en ce que**, si le point de fonctionnement est simultanément compris dans la plage définie par les première et la seconde courbes et la plage définie par les troisième et quatrième courbes, le moteur est piloté selon son fonctionnement en mélange riche.

3. Système selon la revendication 1 ou 2, **caractérisé en ce que** le fonctionnement du moteur est piloté selon le fonctionnement en mélange riche pendant au maximum une première durée prédéterminée.

4. Système selon la revendication 3, **caractérisé en ce que** la première durée prédéterminée est égale à 10 secondes environ.

5. Système selon l'une quelconque des revendications précédentes, **caractérisé en ce que** le fonctionnement du moteur est piloté en mélange pauvre pendant au minimum une seconde durée prédéterminée.

6. Système selon la revendication 5, **caractérisé en ce que** la seconde durée prédéterminée est comprise entre 2 et 3 secondes environ.

7. Système selon l'une quelconque des revendications précédentes, **caractérisé en ce**, si le cumul de l'ensemble des durées du fonctionnement du moteur en mode riche est supérieur à une troisième durée prédéterminée, la phase de désulfatation du piège à NOx est stoppée.

8. Système selon la revendication 7, **caractérisé en ce que** la troisième durée est égale à 270 secondes environ.

## Claims

1. A system for desulphating an NOx trap (10) associated with means forming an oxidation catalyst and integrated into the same support, and arranged in an exhaust duct (12) of a Diesel engine (14) of an automotive vehicle, in which the engine is associated with common rail means (16) for supplying fuel to the cylinders of the engine (14), and which are adapted by modifying operation control parameters of the engine (14) so as to cause the engine (14) to swing between lean mixture operation and rich mixture operation, the supply means (16) being adapted to define at least two strategies for controlling the lean mixture operation of the engine, referred to as level 1 and level 2, so as to obtain different thermal levels in the exhaust duct (12), the thermal level obtained by application of the level 2 strategy being higher than that obtained by application of the level 1 strategy, **characterised in that** it comprises:
- means (22) for detecting a desulphating request for the NOx trap;
- means (36,38) for acquiring the temperature upstream and downstream of the NOx trap and means forming a catalyst, so as to define an operating point in respect of the temperature thereof;
- first means (40) for comparing this operating point to predetermined first and second curves for lower and upper limits for controlling engine operation according to the rich mode if the operating point is within the range defined by the first and second curves, or according to the lean mixture if the operating point is outside this range, and
- second means (42) for comparing this operating point to predetermined third and fourth curves for lower and upper limits for controlling engine operation according to the level 2 strategy if the operating point is within the range defined by the third and fourth curves, or according to the level 1 strategy if the operating point is outside this range.

2. A system according to claim 1, **characterised in that**, if the operating point is simultaneously within the range defined by the first and second curves and the range defined by the third and fourth curves, the engine is controlled according to its rich-mixture operation.

3. A system according to claim 1 or 2, **characterised in that** the engine operation is controlled according to the rich-mixture operation for a maximum of one first predetermined period.

4. A system according to claim 3, **characterised in that** the first predetermined period is equal to approximately 10 seconds.

5. A system according to any one of the preceding claims, **characterised in that** the engine operation is controlled with a lean mixture for a minimum of a second predetermined period.

6. A system according to claim 5, **characterised in that** the second predetermined period is between approximately 2 and 3 seconds.

7. A system according to any one of the preceding claims, **characterised in that**, if the sum of all the operating periods of the engine in rich mode is greater than a predetermined third period, the desulphating phase of the NOx trap is stopped.

8. A system according to claim 7, **characterised in that** the third period is equal to approximately 270 seconds.

## Patentansprüche

1. System zur Entschwefelung einer NOx-Falle (10), verbunden mit einen Oxidationskatalysator (2) bildenden und in denselben Träger integrierten Mitteln und integriert in eine Auspuffleitung (12) eines Dieselmotors (14) eines Kraftfahrzeugs, bei dem der Motor mit Mitteln (16) mit einer gemeinsamen Rampe zur Kraftstoffzufuhr zu den Zylindern des Motors (14) verbunden ist, welche durch Modifizierung von Steuerungsparametern für den Betrieb des Motors (14) dazu angepasst sind, den Motor (14) zwischen dem Betrieb mit armem Gemisch und dem Betrieb mit reichem Gemisch hin und her zu schalten, wobei die Zufuhrmittel (16) dazu angepasst sind, mindestens zwei Steuerstrategien des Motorbetriebs mit armem Gemisch, so genannte Stufe-1- und Stufe-2-Strategien, zu definieren, um verschiedene Wärmepegel in der Auspuffleitung (12) zu erreichen, wobei der durch Anwendung der Stufe-2-Strategie erreichte Wärmepegel höher ist als der durch Anwendung der Stufe-1-Strategie erreichte, **dadurch gekennzeichnet, dass** es Folgendes umfasst:
- Mittel (22) zur Erkennung einer Entschwefelungsanforderung der NOx-Falle;
- Mittel (36, 38) zur Erfassung der Temperatur vor und hinter dem Träger der NOx-Falle und den einen Katalysator bildenden Mitteln, um einen Betriebspunkt bei der Temperatur desselben zu definieren;
- erste Vergleichsmittel (40) dieses Betriebspunkts auf einer ersten und einer zweiten vorgegebenen Kurve der unteren und der oberen Grenzwerte, um den Motorbetrieb im reichen Modus zu steuern, wenn sich der Betriebspunkt innerhalb des von der ersten und der zweiten Kurve definierten Bereichs befindet, oder mit armem Gemisch, wenn sich der Betriebspunkt außerhalb dieses Bereichs befindet; und
- zweite Vergleichsmittel (42) dieses Betriebspunkts auf einer dritten und einer vierten vorgegebenen Kurve der unteren und der oberen Grenzwerte, um den Motorbetrieb gemäß der Stufe-2-Strategie zu steuern, wenn sich der Betriebspunkt innerhalb des von der dritten und der vierten Kurve definierten Bereichs befindet, oder gemäß der Stufe-1-Strategie, wenn sich der Betriebspunkt außerhalb dieses Bereichs befindet.

2. System nach Anspruch 1, **dadurch gekennzeichnet, dass**, wenn sich der Betriebspunkt gleichzeitig innerhalb des von der ersten und der zweiten Kurve definierten Bereichs und innerhalb des von der dritten und der vierten Kurve definierten Bereichs befindet, der Motor gemäß seinem Betrieb mit reichem Gemisch gesteuert wird.

3. System nach Anspruch 1 oder 2, **dadurch gekennzeichnet, dass** der Motorbetrieb während höchstens einer vorgegebenen ersten Dauer im Betrieb mit reichem Gemisch gesteuert wird.

4. System nach Anspruch 3, **dadurch gekennzeichnet, dass** die vorgegebene erste Dauer ungefähr 10 Sekunden beträgt.

5. System nach einem der vorangehenden Ansprüche, **dadurch gekennzeichnet, dass** der Motorbetrieb während mindestens einer vorgegebenen zweiten Dauer mit armem Gemisch gesteuert wird.

6. System nach Anspruch 5, **dadurch gekennzeichnet, dass** die vorgegebene zweite Dauer ungefähr 2 - 3 Sekunden beträgt.

7. System nach einem der vorangehenden Ansprüche, **dadurch gekennzeichnet, dass**, wenn die Summierung aller Dauern des Motorbetriebs im reichen Modus eine vorgegebene dritte Dauer übersteigt, die Entschwefelungsphase der NOx-Falle gestoppt wird.

8. System nach Anspruch 7, **dadurch gekennzeichnet, dass** die dritte Dauer ungefähr 270 Sekunden beträgt.
